# EUROPEAN PATENT SPECIFICATION

(11) **EP 1 441 553 B1**
(45) Date of publication and mention of the grant of the patent: **15.12.2010**
(21) Application number: 04005455.3
(22) Date of filing: 23.01.2001
(51) Int. Cl.: H04W 8/20

(54) **Method and system of remotely controlling a portable terminal by inserting a storage medium**
Verfahren und System zur Fernsteuerung eines tragbaren Endgerätes durch Einfügen eines Speichermediums
Procédé et système pour télécommander un terminal portable par l'insertion d'un support de mémorisation

(30) Priority: 27.09.2000 JP 2000295074
(43) Date of publication of application: 28.07.2004
(62) Divisional of application: 01300578.0
(73) Proprietor: FUJITSU LIMITED, Kawasaki-shi, Kanagawa 211-8588 (JP)
(72) Inventor: TAKAE, Naohito, Nakahara-ku, Kawasaki-shi, Kanagawa 211 (JP); TANI, Hiroyuki Fujitsu Higashi-Hokkaido Systems, Obihiro-shi Hokkaido 080-0016 (JP); FUJIKAWA, Kazuhiro, Nogi Aomori-shi Aomori 030-0192 (JP)
(74) Representative: Stebbing, Timothy Charles

(56) References cited:
- EP-A- 0 583 077
- EP-A- 0 786 916
- EP-A- 0 812 120
- WO-A-00/40048
- FR-A- 2 760 928
- US-A- 5 742 910

## Description

The present invention relates to a technology of remotely controlling a portable terminal with an external device. The portable terminal may be of the type having both a device main body provided with a built-in memory, and an add-on memory such as an attachable/detachable storage medium.

Recently, portable telephones (mobile phones, cellphones) have been widely used. Some of these portable telephones are provided with a storage medium (there are many types of storage media available in the market) in its telephone main body. Accordingly, such a portable telephone can function not only as a communication terminal, but also as an e-commerce (electronic commerce) terminal. More specifically, the recent portable telephone includes an ME (Module Element) that realizes a function as a telephone main body, a SIM card (Subscriber Identity Module Card) that realizes a function as a subscriber identifying module, and an IC card (Integrated Circuit Card) that functions in various ways as an external storage medium (for example, this may be a credit card).

Along with the spread of functions realized by the portable telephone, there has been an increasing need to change these functions to meet the users= (subscribers') request. When the subscriber wishes to change the settings of the portable telephone, a communication provider has to change the functions of the ME, SIM card, and IC card by remote control (i.e., by wireless communication).

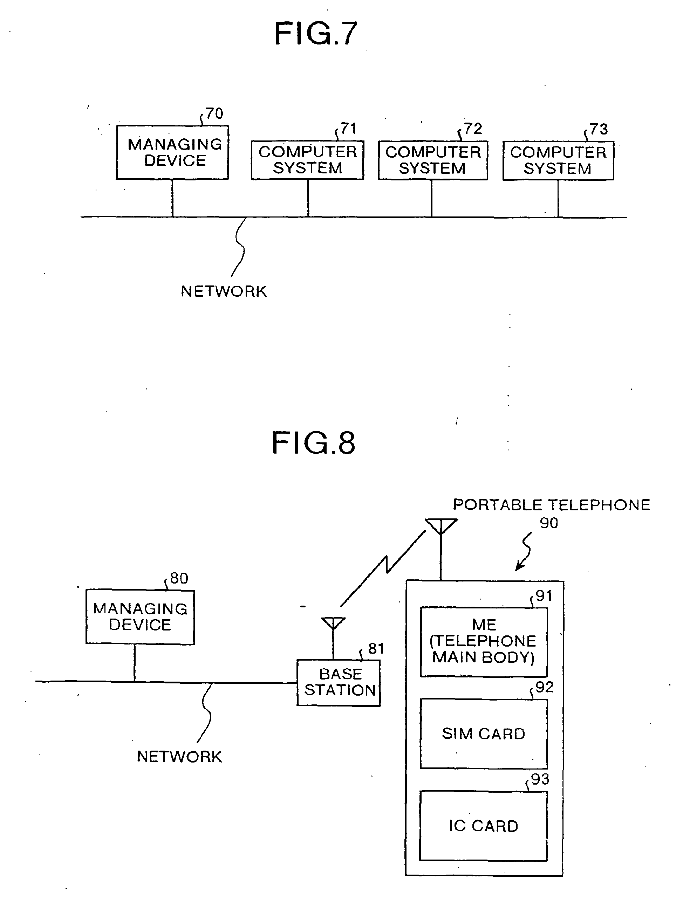

There has been known a method of remotely controlling a plurality of network-linked computer systems using e-mail (electronic mail). Fig. 7 shows a conventional remote control method in which a plurality of computer systems are controlled remotely. A managing device 70 remotely controls a plurality of computer systems 71, 72, and 73 by sending a setting changing e-mail to each, so that, upon receipt of the setting changing e-mail, each of the computer systems 71, 72, and 73 changes its settings to the one instructed in the setting changing e-mail.

The foregoing method of remotely controlling a plurality of computer systems can be adapted to remotely control a portable telephone composed of the ME, SIM card, and IC card. Fig. 8 shows a case in which a plurality of portable telephones are remotely controlled. A managing device 80 changes the function of each of an ME 91, an SIM card 92, and an IC card 93 individually by sending, via a base station 81, an ME setting changing mail, an SIM card setting changing mail, and an IC card setting changing mail separately to a portable telephone 90 containing these elements.

Conventionally, when the subscriber wishes to change the set-ups for the functions of the ME, SIM card, and IC card collectively, the subscriber is required to send a separate mail for each. However, this has the disadvantage of leading to extra work. In particular, because it is difficult to ensure synchronization, communication is disabled if the portable telephone receives the setting changing mail for the SIM card before the one for the ME.

Furthermore, conventionally, when the subscriber wishes to change the set-up of a newly inserted SIM card or IC card, or to change the set-up of a new ME into which the SIM card or IC card is reinserted in the same manner as before, the subscriber has to do so by sending a mail again. This poses a problem that efficiency of the set-up change in the portable telephone is not satisfactory.

It is therefore desirable to provide a technology by which it is possible to efficiently change the settings of portable terminals.

EP-A-0 899 873 discloses a method and a system according to the preamble of each of the corresponding independent claims. When a short message including command data addressed to the subscriber identification card fitted to a mobile phone is received by the mobile phone, the processing means of the mobile phone instigate the storage of the message in buffer devices of the memory means of the mobile phone and transfer the message to the SIM card via an access interface. The processing means of the SIM card execute the commands contained in the short message that they receive, which leads to elimination of the data corresponding to these commands from the short message containing it. Thus, only the setting changing of a single SIM card is disclosed by the above process.

According to EP-A-0 562 890, in a mobile communication network, if the user of a mobile telephone wishes to change the functions available to him, he notifies the supplier accordingly and the supplier arranges, via a service center, for a suitable signal to be stored in the network either at the service center or at a mobile switching center (MSC). The MSC immediately tries to send a short message to the mobile telephone without waiting for the mobile telephone to be activated. If this fails, due to the mobile telephone being switched off, the MSC will keep trying for a predetermined period, until successful; otherwise, the next time the user uses the network, by activation of the mobile telephone, the MSC identifies such use by noting the unique identifier of the user associated with a SIM contained in the mobile telephone, and immediately sends a signal to the mobile telephone which causes the SIM to re-configure itself according to the newly desired functions. Again, however, only the use of a single SIM card is discussed.

US-A-5 418 837 discloses a technique for upgrading a mobile telephone involving the use of a software upgrading module card which is temporarily inserted into the mobile telephone. A handshaking procedure is carried out prior to upgrading so as to verify that the correct telephone is being upgraded.

US-A-5742910 describes a mobile telephone remote programming system and method including a mobile telephone that has a subscriber ID module (SIM) which can store control data for voice message actuation and vocoder parameters. The telephone is adapted to receive digital programming information over a radio communication link. The programming information is adapted to modify the contents of the SIM to include updated voice message actuation data and/or vocoder data. The telephone uses the stored data to control voice message actuation and/or vocoder operation.

FR-A-2 760 928 describes a method for programming a portable one-way messaging receiver comprising at least a programmable electronic central unit and a chip card reader, adapted to set up communication between the central unit and a portable card provided with an integrated circuit with memory. This programming is carried out by loading in a memory of the receiver a general information database and a programme for operating this database, so as to enable the receiver to receive general data by radio relay channel, to store these data in the database, and to restore them according to a user's queries.

The present invention is defined in the attached independent claims, to which reference should now be made. Further, preferred features may be found in the sub-claims appended thereto.

Thus, the prior art deals with the changing of settings in a single mobile telephone or SIM card, but does not provide a solution to the above-mentioned difficulty of changing the set-ups for the functions of a main body, SIM card and IC collectively as mentioned above.

According to a first aspect of the invention, there is provided a portable terminal remote control method of remotely controlling a portable terminal from an external device according to independent Claim 1.

According to a second aspect of the invention, there is provided a portable terminal remote control system according to independent claim 4.

Thus, in the present invention a user sends a request to an external device to effect a change in the setting of his/her portable terminal. Upon receipt of such a request, the external device sends a mail (e-mail, message or data file) to the portable terminal. This mail contains a computer program which changes a part or all of the content of the memory of the portable terminal thereby changing the setting in the portable terminal. Therefore, the setting of the portable terminal can be changed efficiently.

Reference is made, by way of example, to the accompanying drawings in which:-
Fig. 1 is a view depicting an arrangement of a portable telephone remote control system useful for understanding the present invention.
Fig. 2 is a block diagram depicting an arrangement of a remote control center 10 shown in Fig. 1.
Fig. 3 is a block diagram depicting an arrangement of a portable telephone 20 shown in Fig. 1.
Fig. 4 is a flowchart detailing an operation which is useful for understanding the present invention.
Fig. 5 is a flowchart detailing another operation useful for understanding of the present invention.
Fig. 6 is a flowchart detailing an operation in an embodiment of the present invention.
Fig. 7 is a view explaining a prior art remote control technology for a portable telephone.
Fig. 8 is a view explaining a prior art remote control technology for a portable telephone.

A preferred embodiment of a portable terminal remote control method of the present invention will be described later. First, some related methods useful for understanding the invention will be explained by way of a portable telephone remote control system using a portable terminal remote control method.

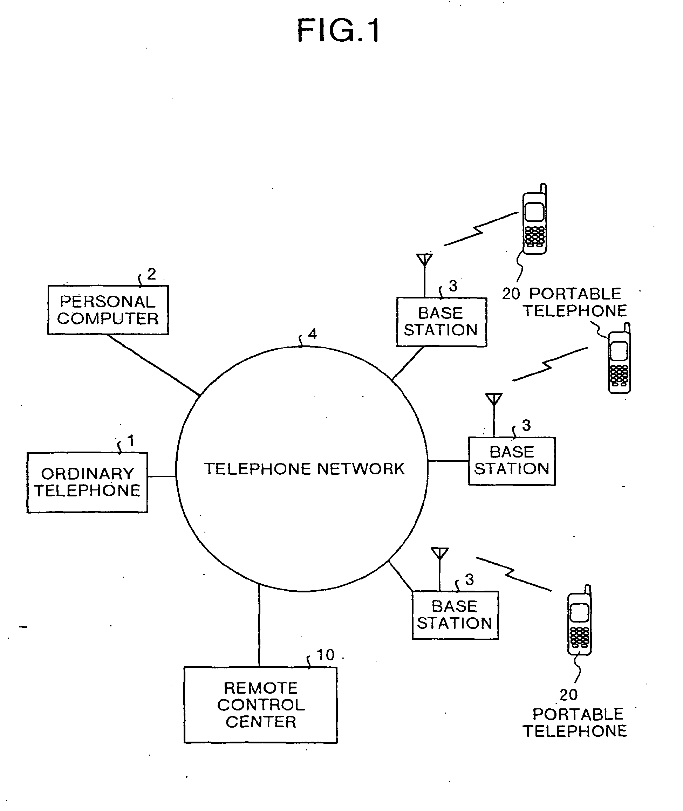

A first arrangement of a portable telephone remote control system useful for understanding the present invention will now be explained. Fig. 1 is a view depicting an arrangement of the portable telephone remote control system. The portable telephone remote control system is formed by linking to a telephone network 4 an ordinary telephone (fixed-line handset) 1, a personal computer 2, a remote control center 10 that is owned by a communication provider as a server, and a portable telephone 20 through a base station 3.

Schematically, the remote control center 10 accepts a request related to a set-up change in the portable telephone 20 from the subscriber of the portable telephone 20 through the ordinary telephone 1, personal computer 2, or the portable telephone 20. Then, the remote control center 10 changes the setting in the portable telephone 20 by means of remote control by sending a setting changing application suitable to the request to the portable telephone 20 owned by said subscriber.

It should be noticed that the portable telephone remote control system features a particular manner according to which the settings in the portable telephone 20 are changed, and more specifically, it sends a setting changing application to the portable telephone 20 in the form of a telegraphic message (e-mail, data file) so as to collectively change the setting in the telephone main body and storage medium forming the portable telephone 20.

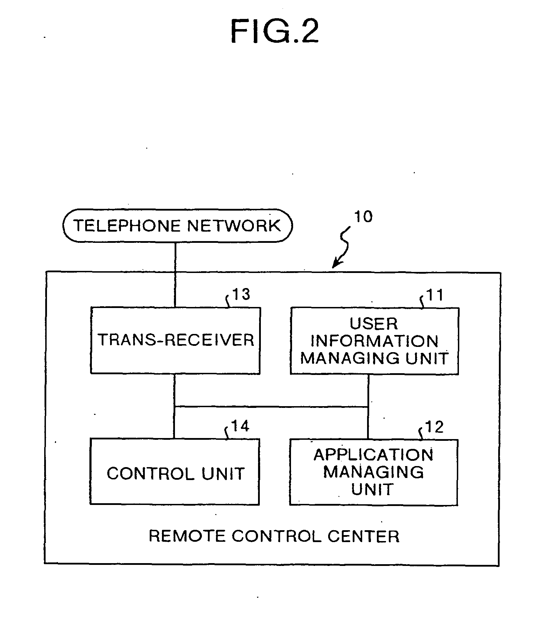

Next, the following description will describe an arrangement of the remote control center 10 shown in Fig. 1. Fig. 2 is a block diagram depicting an arrangement of the remote control center 10 shown in Fig. 1. As shown in the drawing, the remote control center 10 shown in Fig. 1 comprises a user information managing unit 11, an application managing unit 12, a trans-receiver (transceiver or I/O interface) 13, and a control unit 14.

Generally, the remote control center 10 not only controls a communication among the ordinary telephone 1, personal computer 2, and portable telephone 20, all linked to the telephone network 4, but also runs a job of changing the setting in the portable telephone 20 by sending a setting changing application to the portable telephone 20. The details of the communication control job are the same as that in a general network managing station. Thus, the explanation of the foregoing is omitted herein, and the following description will describe only the setting changing job.

The user information managing unit 11 manages subscriber identity information of the subscriber of the portable telephone 20. More specifically, the user information managing unit 11 stores and manages useful information in authenticating the subscriber's identification, such as the telephone number of the portable telephone 20, the name of the subscriber, and his password, and useful information in determining the setting subject to changing, such as the current setting in the portable telephone 20.

The application managing unit 12 manages a setting changing application for changing the setting in the portable telephone 20. The setting changing application referred to herein is an application capable of collectively changing stored contents in the telephone main body and storage media forming the portable telephone 20. In this example, these elements comprise a Module Element (hereafter, ME), a SIM card (Subscriber Identity Module Card), and an IC card (Integrated Circuit Card).

For example, functions of the setting changing application include the change from a ring sound OFF mode to a ring sound ON mode, addition/change of a function realized by the telephone main body, SIM card, and IC card, a set-up change (in case of loss and theft) for disabling all the functions realized by the telephone main body, SIM card, and IC card, etc. These examples will be described more in detail below.

The trans-receiver 13 carries out a communication related to the setting changing job among the ordinary telephone 1, personal computer 2, and portable telephone 20 via the telephone network 4. More specifically, the trans-receiver 13 receives information containing a request related to a set-up change in the portable telephone 20 from the subscriber of the portable telephone 20 through the ordinary telephone 1, personal computer 2, or portable telephone 20. When accepting the request, the trans-receiver 13 also receives useful information in authenticating the subscriber=s identification, such as the telephone number of the portable telephone 20, the name of the subscriber, and his password. Also, the trans-receiver 13 sends a setting changing application suitable to the request to the portable telephone 20.

The control unit 14 carries out a job related to the setting changing job by controlling each component in the remote control center 10. More specifically, the control unit 14 authenticates the subscriber's identification as an authorized subscriber by comparing the telephone number of the portable telephone 20, the name of the subscriber, and his password received from the trans-receiver 13 with the user identity information managed by the user information managing unit 11. Upon authentication as the authorized subscriber, the control unit 14 determines a suitable setting changing application to the request related to the set-up change in the portable telephone 20 received from the trans-receiver 13 out of applications managed in the application managing unit 12.

Then, the control unit 14 generates a telegraphic message (mail) containing the setting changing application thus determined, and sends the mail to the portable telephone 20 from the transmission/reception of device 13. When sending the mail containing the setting changing application, the control unit 14 appends a set-up change identifier so as to be distinguished from other normal mails. If the portable telephone 20 cannot receive the setting changing application because its power is turned OFF or it is present in a communication disabled area, the control unit 14 keeps sending the setting changing application until the portable telephone 20 receives the same.

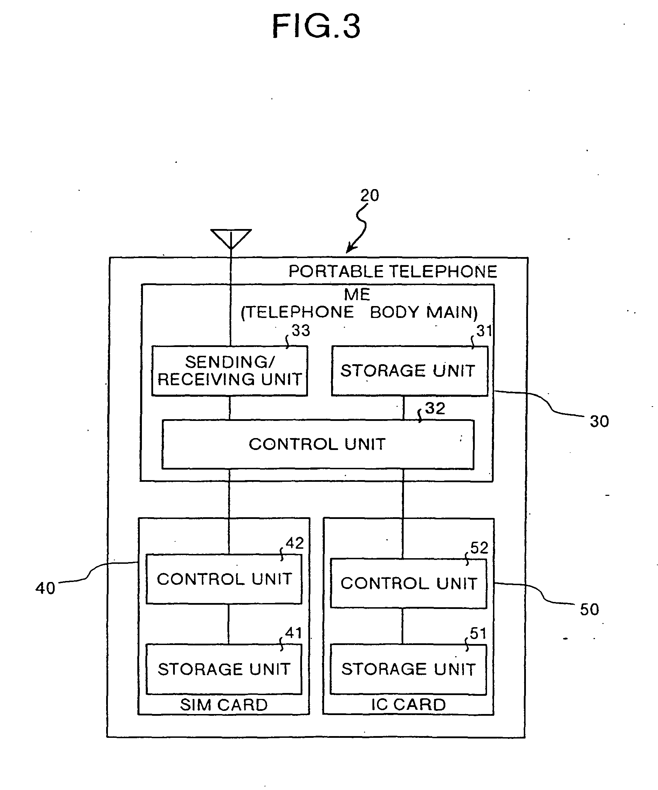

Next, the following description will describe an arrangement of the portable telephone 20 shown in Fig. 1 with reference to Fig. 3. Fig. 3 is a block diagram depicting the arrangement of the portable telephone 20 shown in Fig. 1. As shown in the drawing, the portable telephone 20 shown in Fig. 1 comprises an ME 30 serving as the telephone main body, a SIM card 40 serving as a storage medium and an IC card 50. In the present example, both the SIM card 40 and the IC card 50 are attachable/detachable to/from the portable telephone 20.

Schematically, the portable telephone 20 not only functions as a communication terminal or an e-commerce terminal by using the ME 30, SIM card 40, and IC card 50, but also runs a job of changing the setting in the ME 30, SIM card 40, and IC card 50 by receiving the setting changing application from the remote control center 10.

An arrangement of each of the ME 30, SIM card 40, and IC card 50 that allow functions as the communication terminal and e-commerce terminal is the same as that of a general portable telephone provided with an IC card. Thus, a detailed explanation of the foregoing is omitted herein, and the following description will briefly describe the function of each of the ME 30, SIM card 40, and IC card 50, and then the content related to the setting changing job.

As shown in Fig. 3, the ME 30 comprises a storage unit 31, a control unit 32, and a trans-receiver 33. Also, the SIM card 40 comprises a storage unit 41 and a control unit 42, and the IC card 50 comprises a storage unit 51 and a control unit 52. Preferably, both the SIM card 40 and IC card 50 are physically adapted so as to be attachable/detachable into and from recesses in the telephone main body. Although it is not shown in Fig. 3, it should be appreciated that the ME 30 also includes the usual components of a mobile phone including a keypad, microphone, loudspeaker and display, or more generally a key input unit (manipulation unit), a voice input unit, voice output unit, and a display unit.

The ME 30 realizes the functions of the telephone main body. More specifically, it realizes functions of: transmission/reception of sound, transmission/reception of mails, downloading various kinds of applications (Java applets), downloading music data or image data via the Internet, allowing a processor-to-processor communication with the SIM card 40 and IC card 50 inserted into the portable telephone 20, allowing a communication with another portable telephone, a POS terminal, or a vending machine by means of a wireless technique, such as Bluetooth, allowing a communication with a noncontact IC card using a noncontact IC card reader/writer, etc.

In the ME 30, the storage unit 31 stores programs and data of various kinds used in realizing the foregoing functions, and the control unit 32 runs a job to effect the foregoing functions by controlling the storage unit 31.

The SIM card 40 is a storage medium issued by a communication provider, and acts as a subscriber identity module that authenticates the subscriber's identification of the portable telephone 20. More specifically, in the SIM card 40, the storage unit 41 stores the subscriber identity information (electronic certificate) and terminal information required for communication with an external device and a cryptography program for encrypting the foregoing information, and the control unit 42 runs a job to effect the functions of the subscriber identity module by controlling the storage unit 41.

The IC card 50 is a storage medium issued by a third party other than the communication provider, and realizes various kinds of external storage functions for enhancing the functionality of the portable telephone 20. More specifically, the IC card 50 realizes functions such as a credit card, a cash card (debit card), tickets of various kinds, a commuting path (travel ticket or navigation device), a shop's trading stamp card (loyalty card), a patient's registration card (health data record), an image storage medium, and a music storage medium.

In the IC card 50, the storage unit 51 stores programs and data of various kinds used in realizing the foregoing functions, and the control unit 52 runs a job to effect the foregoing functions by controlling the storage unit 51.

The above description explained a case where the SIM card 40 and IC card 50 include their respective control units 42 and 52. It should be appreciated, however, that the present invention is not limited to the above case, and can be adapted to a case where neither the SIM card 40 nor IC card 50 is provided with their own control unit. In this case, the control unit 32 in the ME 30 makes the SIM card 40 and IC card 50 effect their functions by using the data and programs stored in their respective storage units 41 and 42.

The above description explained a case where the ME 30 SIM card 40, and IC card 50 effect their respective functions separately. It should be appreciated, however, that the present invention is not limited to the above case, and can be adapted to a case where the ME 30, SIM card 40, and IC card 50 effect one function as a whole. In this case, the ME 30, SIM card 40, and IC card 50 effect one function as a whole by using appropriate data and programs stored in their respective storage units 31, 32, and 33.

Also, the above description explained a case where the storage units 31, 32, and 33 provided respectively in the ME 30, SIM card 40, and IC card 50 store different data and programs. It should be appreciated, however, that the present invention is not limited to the above case, and can be adapted to a case where the storage units 31, 32, and 33 store the same data and programs. In this case, the ME 30, SIM card 40, and IC card 50 effect the same function.

As explained above, the portable telephone 20 realizes various kinds of functions by using the ME 30, SIM card 40, and IC card 50. Also, the portable telephone 20 runs a job of changing the setting related to these functions. The following description will describe the contents related to the setting changing job.

The trans-receiver (sending-receiving unit) 33 in the ME 30 receives a setting changing application that collectively changes the setting related to the functions realized by the ME 30, SIM card 40, and IC card 50 from the remote control center 10 via the telephone network 4. More specifically, the trans-receiver 33 receives a mail (electronic mail or other mode of data transfer provided by a wireless (network) that contains the setting changing application and is appended with the set-up change identifier.

The control section 32 in the ME 30 opens the received mail in response to the set-up change identifier appended to the same, and activates the setting changing application contained therein, whereby the setting related to the functions realized by the ME 30, SIM card 40, and IC card 50 are changed collectively. More specifically, the control section 32 accesses not only the ME 30, but also the SIM card 40 and IC card 50 (processor-to-processor communication), and changes the setting collectively by adding/deleting/changing the programs and data of various kinds in the ME 30, SIM card 40, and IC card 50.

Concrete examples of the set-up change include: a set-up change that collectively upgrades the version of certain functions realized by the ME 30, SIM card 40, and IC card 50, and a set-up change (set-up change in case of loss and theft) that collectively disables all the functions realized by the ME 30, SIM card 40, and IC card 50, etc.

In case that the ME 30, SIM card 40, and IC card 50 effect one function as a whole by using appropriate data and programs stored in their respective storage units 31, 32, and 33, a set-up change that changes the foregoing data and programs collectively is available. Also, in case that the storage units 31, 32, and 33 store the same data and programs, a set-up change that changes the foregoing data and programs collectively is available.

The above description explained a case where the setting in the ME 30, SIM card 40, and IC card 50 are changed by activating the setting changing application by means of the control unit 32 in the ME 30. It should be appreciated, however, that the above system is not limited to the above case, and can be adapted to a case where the settings in the ME 30, SIM card 40, and IC card 50 are changed principally by the control unit 42 in the SIM card 40 or the control unit 52 in the IC card 50.

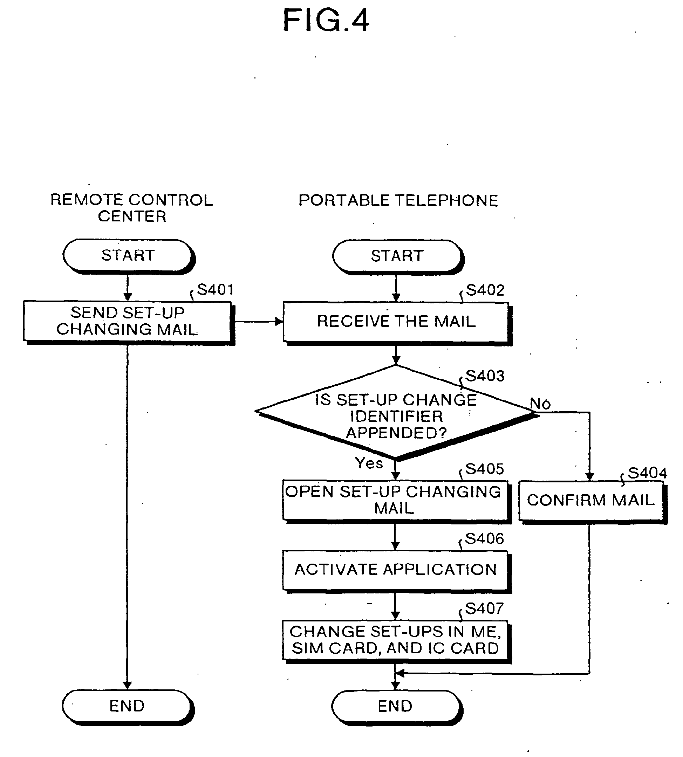

Next, the following description will describe an operation (setting changing job) in the system of Fig. 1 with reference to the operation flowchart of Fig. 4. The explanation will be given on the assumption that the remote control center 10 has completed the jobs of: accepting a request related to the set-up change, authenticating the subscriber's identification, and determining the setting changing application suitable to the request.

As shown in Fig. 4, the remote control center 10 sends the portable telephone 20 a mail containing the setting changing application that changes the setting in the ME 30, SIM card 40, and IC card 50 forming the portable telephone 20 (Step S401).

Then, the portable telephone 20 receives the mail containing the setting changing application from the remote control center 10 (Step S402), and judges whether the set-up change identifier is appended to the mail or not (Step S403).

Upon judging that the set-up change identifier is appended (Yes in Step S403), the portable telephone 20 automatically opens the mail containing the setting changing application in response to the set-up change identifier (Step S405).

Then, the portable telephone 20 activates the setting changing application contained in the opened mail (Step S406), and collectively changes the setting in the ME 30, SIM card 40, and IC card 50 forming the portable telephone 20 (Step 407). Upon judging that the set-up change identifier is not appended (No in Step S403), the portable telephone 20 judges that it is a normal mail and displays the content thereof (Step S404).

As described above, in the system of Fig. 1, the remote control center 10 accepts a request related to the set-up change in the portable telephone 20 from the user of the portable telephone 20, and sends the portable telephone 20 a setting changing mail that collectively changes the storage contents in the ME 30, SIM card 40, and IC card 50 in response to the accepted request, whereby the portable telephone 20 collectively updates the storage contents in the ME 30, SIM card 40, and IC card 50 based on the setting changing mail. Thus, the setting in the ME 30, SIM card 40, and IC card 50 can be changed collectively by sending a communication mail only once, thereby making it possible to change the setting in the portable telephone 20 efficiently.

Furthermore, the ME 30 runs the application contained in the setting changing mail, so that the storage contents in the ME 30, SIM card 40, and IC card 50 are updated. Hence, the setting can be changed efficiently in the portable telephone 20 that realizes complicated functions.

In addition, the control section 32 in the ME 30 updates the storage contents in the storage unit 31 in the ME 30 by running the application contained in the setting changing mail, while at the same time, the storage contents in the storage units 41 and 51 provided respectively in the SIM card 40 and IC card 50 are updated by means of a processor-to-processor communication between the control section 32 in the ME 30 and the control sections 42 and 52 respectively provided with the SIM card 40 and IC card 50. Consequently, the setting can be changed efficiently in the portable telephone 20 provided with various kinds of storage media and thereby effecting various kinds of functions. In particular, the set-up change that disables the functions of the SIM card 40 and IC card 50 besides the ME 30 is effective in case of loss of the portable telephone 20.

Furthermore, the remote control center 10 sends a setting changing mail containing the application that collectively changes the ME 30, SIM card 40, and IC card 50 and appended with the set-up change identifier, and when the set-up change identifier is present in the mail, the portable telephone 20 activates the application contained in the mail, whereby the storage contents in the ME 30, SIM card 40, and IC card 50 are updated collectively. Thus, the setting can be changed efficiently without requiring the user to apply special manipulations to the portable telephone 20 for the set-up change. In particular, the set-up change that disables the function by means of remote control is effective in case of loss of the portable telephone 20.

In addition, upon acceptance of a request related to the set-up change in the portable telephone 20 from the user of the portable telephone 20, the remote control center 10 generates a setting changing mail that contains a suitable application to the accepted request. Thus, the setting in the portable telephone 20 can be changed efficiently as the user desires.

Furthermore, upon acceptance of a request related to the set-up change in the portable telephone 20 from the user of the portable telephone 20, the remote control center 10 authenticates the user=s identification as the authorized subscriber, and upon authentication as the authorized subscriber, the remote control center 10 generates a setting changing mail that contains an application suitable to the accepted request. Consequently, it is possible to prevent a change of the setting in the portable telephone 20 as intended by a third party other than the subscriber.

The above description concerned a case where the portable telephone provided with the SIM card 40 and IC card 50 is remotely controlled. However, the present invention is not limited to the above case. That is, the present invention can be adapted to a case where an external device remotely controls any kind of portable terminal (for example, PDA, etc.) composed of a device main body provided with a built-in memory and an attachable/detachable storage medium.

Incidentally, the above system described a case where the portable telephone, in which the SIM card and IC card are inserted in the ME, receives the setting changing application and runs the setting changing job. The above system is not limited to the above case. That is, even when a SIM card or IC card having a changed set-up is pulled out, and another SIM card or IC card is newly inserted, the portable telephone can run the same setting changing job for the new SIM card or IC card.

There will now be described, by way of background explanation, a setting changing job for a portable telephone, in which a SIM card having its set-up changed is pulled out, and a new SIM card is inserted. In this setting changing job, the system arrangement of the portable telephone remote control system is the same as that shown in Fig. 1, the arrangement of the remote control center 10 is the same as that shown in Fig. 2, and the arrangement of the portable telephone 20 is the same as that shown in Fig. 3. Thus, the explanation of the foregoing is omitted, and the following description will describe only an operation (setting changing job on the newly inserted SIM card) which is different.

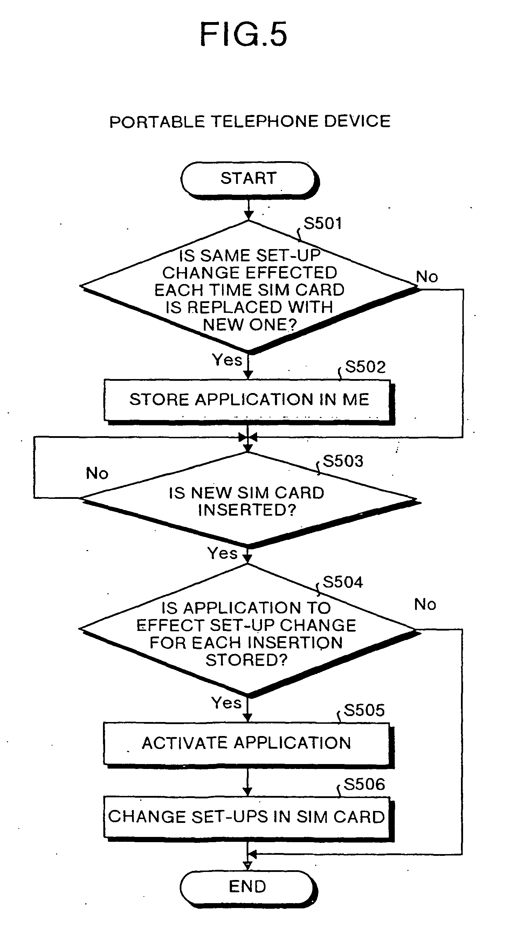

Fig. 5 shows a flowchart detailing the operation in this case, with the assumption that the setting changing job already described above has been completed.

That is, the explanation will be given on the assumption that, upon acceptance of an additional request related to the set-up change in the portable telephone 20 specifying "to effect the same set-up change for the SIM card 40 each time it is replaced with a new one", the control unit 14 in the remote control center 10 has sent a setting changing application appended with an identifier specifying "to effect the same set-up change each time the SIM card is replaced with a new one" to the portable telephone 20, which accordingly has run the setting changing job described above by using the received setting changing application.

As shown in Fig. 5, upon completion of the setting changing job by using the setting changing application, if the portable telephone 20 judges that the setting changing application is the one specifying "to effect the same set-up change each time the SIM card is replaced with a new one" from the identifier (Yes in Step S501), the portable telephone 20 stores the setting changing application in the storage unit 31 in the ME 30 (Step S502).

When the SIM card 40 to which the setting changing job has been applied is pulled out and a new SIM card is inserted (Yes in Step S503), the portable telephone 20 judges whether the setting changing application specifying "to effect the same set-up change each time the SIM card is replaced with a new one" is stored in the storage unit 31 in the ME 30 (Step S504).

If so (Yes in Step S504), the portable telephone 20 activates the application (Step S505), and changes the setting in the newly inserted SIM card in the same manner as the replaced SIM card 40 (Step S506).

As explained above, in the setting changing job, when a setting changing mail is stored in the storage unit 31 in the ME 30 and the SIM card 40 is replaced with a new SIM card, the portable telephone 20 updates the storage contents in said latter SIM card by running the application contained in the stored setting changing mail. Consequently, when the user wishes to change the set-up of the newly inserted SIM card in the same manner as the replaced one, the portable telephone 20 does not have to receive the setting changing mail again from the remote control center 10, thereby making it possible to change the setting in the portable telephone 20 efficiently. In particular, the set-up change that disables the functions of the portable telephone is effective when a third party tries to use in bad faith someone else's lost portable telephone by inserting a new SIM card.

The above description concerned a case where the SIM card 40 is replaced with another SIM card. However, the setting changing job is not limited to this case. That is, it can be adapted to a case where the IC card 50 is replaced with another IC card.

There has just been described a case where, if the SIM card or IC card having a changed set-up is pulled out and another SIM card or IC card is newly inserted into the portable telephone, the setting changing job is carried out for the latter SIM card or IC card in the same manner as before. However, the present invention relates to another case. That is, when the SIM card or IC card having its set-ups changed is pulled out and reinserted into another portable telephone provided with an ME whose set-up is unchanged, the same setting changing job can be run for the ME. An embodiment of the invention will now be described.

The embodiment of the present invention relates to a setting changing job in a portable telephone 21, into which the SIM card pulled out from the portable telephone 20 is reinserted. The system arrangement of the portable telephone remote control system is the same as that shown in Fig. 1, the arrangement of the remote control center 10 is the same as that shown in Fig. 2, and the arrangement of each of the portable telephones 20 and 21 is the same as that shown in Fig. 3. Thus, the explanation of the foregoing is omitted, and the following description will describe only an operation (setting changing job for the ME after reinsertion) in the embodiment of the present invention.

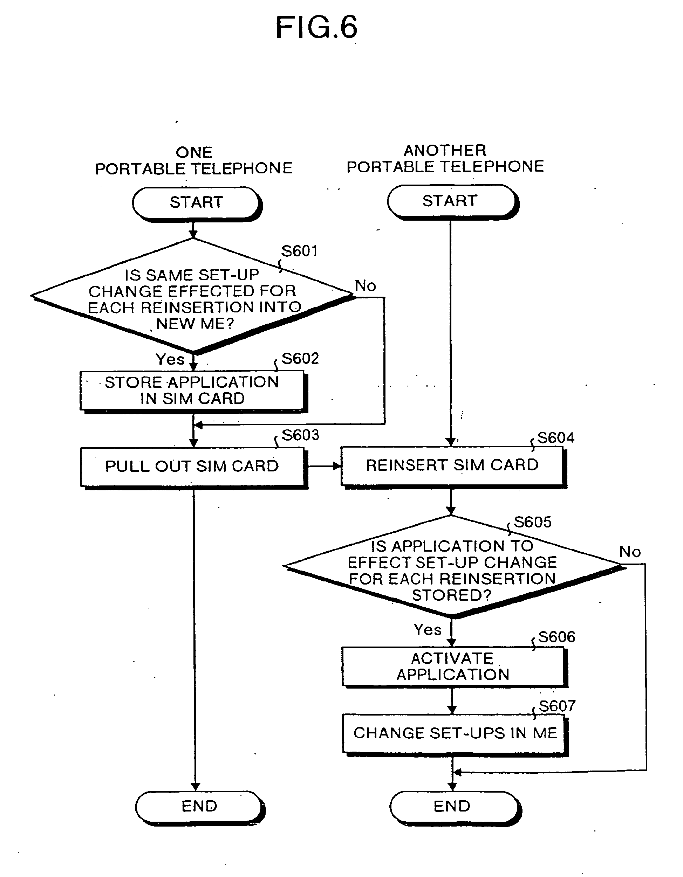

Fig. 6 show a flowchart detailing the operation in the embodiment of the present invention. The explanation will be given on the assumption that the setting changing job explained in relation to Fig. 4 has been completed.

More specifically, the explanation will be given on the assumption that, upon acceptance of an additional request related to the set-up change in the portable telephone 20 specifying "to effect the same set-up change to the ME in another portable telephone each time the SIM card 40 is reinserted into a new portable telephone", the control unit 14 in the remote control center 10 has sent the setting changing application appended with the identifier specifying "to effect the same set-up change to the ME each time the SIM card is reinserted into a new ME" to the portable telephone 20, which accordingly as run the setting changing job described above by using the received setting changing application.

As shown in Fig. 6, upon completion of the setting changing job by using the setting changing application, if the portable telephone 20 judges that the setting changing application is the one specifying "to effect the same set-up change to the ME each time the SIM card is reinserted into a new ME" from the identifier (YES in Step S601), the portable telephone 20 stores the setting changing application in the storage unit 41 in the SIM card 40 (Step S602).

The SIM card 40 whose set-up has been changed is pulled out from the portable telephone 20 (Step S603), and the pulled out SIM card 40 is reinserted into another portable telephone 21 (Step S604).

The portable telephone 21 into which the SIM card 40 is reinserted judges whether the setting changing application specifying "to effect the same set-up change to the ME each time the SIM card is reinserted into a new ME" is stored in the storage unit 41 in the SIM card 40 (Step S605).

If so (Yes in Step S605), the portable telephone 21 activates the application (Step S606), and changes the ME settings in the portable telephone 21 to those of the ME 30 in the portable telephone 20 (Step S607).

As explained above, according to the embodiment, when the setting changing mail (message instruction) is stored in the SIM card 40 and the SIM card 40 is reinserted into another portable telephone 21, the portable telephone 20 runs the application contained in the stored setting changing mail, whereby the storage contents in the ME in the portable telephone 21 are updated. Consequently, in case that the SIM card 40 having a changed set-up is reinserted into another portable telephone 21 and the set-up of the new ME is to be changed in the same manner, the portable telephone 21 does not have to receive the setting changing mail again from the remote control center 10, thereby making it possible to change the setting in the portable telephone 21 efficiently. In particular, the set-up change that disables the functions of the portable telephone is effective when a third party tries to pull out in bad faith the SIM card from someone else's lost portable telephone and reinsert the same into another portable telephone.

The above embodiment explained a case where the SIM card 40 is reinserted into another portable telephone 21. However, the present invention is not limited to this case. That is, the present invention can be adapted to a case where the IC card 50 is reinserted into another portable telephone 21.

An embodiment of the present invention has been described above with reference to the accompanying drawings. However, concrete examples of the arrangement are not limited to the explained embodiment. That is, design modifications and the like in various manners without deviating from the subject of the present invention are included in the present invention.

For example, in the above embodiment a SIM card 40 or an IC card 50 are physically inserted into a portable telephone; however, this is not essential and a storage medium may be associated with the portable telephone without necessarily being physically connected therewith.

The portable telephone remote control method can be achieved by running a prepared program by a computer, such as a personal computer and a workstation. Such a program is recorded in a computer-readable recording medium, such as a hard disk, a floppy disk, a CD-ROM, an MO, and a DVD, and run when read out from the recording medium by the computer. Also, such a program can be distributed by transmission via a network, such as the Internet.

As explained above, in a portable terminal remote control method for allowing an external device to remotely control a portable terminal composed of a main body provided with a built-in memory and an associated (e.g. attachable/detachable) storage medium, a request related to a change of setting in the portable terminal from a user of the portable terminal is accepted, and a setting changing mail that collectively changes storage contents in the built-in memory and storage medium is sent to the portable terminal owned by said user in response to the request accepted. Consequently, the set-ups of the main body and storage medium can be changed collectively by sending a communication mail (set-up instruction) only once, thereby achieving an effect that the settings of the portable terminal can be changed efficiently.

Furthermore, in a portable terminal remote control method for a portable terminal composed of a main body provided with a built-in memory that is remotely controlled by an external device and an associated storage medium, a setting changing mail that is sent from the external device and collectively changes storage contents in the built-in memory and storage medium is received, and the storage contents in the built-in memory and storage medium are collectively updated based on the mail received. Consequently, the set-ups of the main body and storage medium can be changed collectively by sending a communication mail only once, thereby achieving an effect that the setting in the portable terminal can be changed efficiently.

Furthermore, the storage contents in the built-in memory are updated by running an application contained in the setting changing mail by a processor in the main body, and the storage contents of storage media (such as an IC card or subscriber identity module card) are updated by means of a processor-to-processor communication between the processor in the main body and a processor of each storage medium. Consequently, there can be achieved an effect that the setting can be changed efficiently even in a portable terminal that is provided with a plurality of storage media and thereby realizes various kinds of functions.

Furthermore, preferably, the setting changing mail is stored in the internal memory, and when the storage medium is replaced with another storage medium, the contents of that storage medium are updated by running the application contained in the setting changing mail stored in the internal memory. Consequently, when effecting the same change of setting to a newly inserted recording medium, it does not have to receive the setting changing mail from the external device again, thereby achieving an effect that the setting in the portable terminal can be changed effectively.

In the present invention, the setting changing mail is stored in the storage medium, and when the storage medium used in conjunction with another main body (e.g. by insertion into it), storage contents in an internal memory in that other main body are updated by running the application contained in the setting changing mail stored in the storage medium. Consequently, when effecting the same change of setting to a new main body into which is inserted a storage medium having a changed set-up, it does not have to receive the setting changing mail again from the external device, thereby achieving an effect that the setting in the portable terminal can be changed efficiently.

## Claims

1. A portable terminal remote control method of remotely controlling a portable terminal (20) from an external device (10), said portable terminal (20) having a main body (30) provided with a built-in memory (31), and an attachable/detachable storage medium (40, 50), the method comprising:
a setting changing mail sending step of sending a first setting changing mail, by the external device (10) to the portable terminal (20), that collectively changes the contents of said built-in memory (31) and the storage medium (40, 50) of the portable terminal (20); and
a storing step of storing the first setting changing mail in the built-in memory (31); the portable terminal remote control method being **characterised by**:
a step of accepting a request by the external device (10) related to a change of setting in the portable terminal (20) from a user of the portable terminal (20), wherein,
the setting changing mail sending step includes sending a second setting changing mail, by the external device (10) to the portable terminal (20) that changes the contents of a built-in memory (31) of another portable terminal according to the second setting changing mail when the storage medium (40, 50) is inserted into the another portable terminal in response to the received request, and the storing step includes storing the second setting changing mail in the storage medium (40, 50); and
a terminal updating step of, when the storage medium (40, 50) is inserted into the another portable terminal, and if the second setting changing mail specifies that the same set-up change should be effected to the another portable terminal each time the storage medium (40, 50) is reinserted into the another portable terminal, updating the contents in an internal memory of the another portable terminal by the second setting changing mail stored in the storage medium (40, 50).

2. The portable terminal remote control method according to claim 1,
wherein in the setting changing mail sending step, each of said first and second setting changing mails includes in addition to a computer program, a change of setting identifier.

3. The portable terminal remote control method according to claim 1 or 2 further comprising:
an authenticating step of, upon acceptance of the request related to the change of setting in said portable terminal (20) from the user of said portable terminal, checking whether the user is an authorized user or not, and generating the setting changing mail only when the user is an authorized user.

4. A portable terminal remote control system having at least one external device (10) and at least one portable terminal (20) and capable of remotely controlling said portable terminal (20) from said external device (10), said portable terminal (20) having a main body (30) provided with a built-in memory (31), and an attachable/detachable storage medium (40, 50),
wherein said external device (10) comprises:
a setting changing mail sending (12, 14) unit which is adapted to send a first setting changing mail, to said portable terminal (20) for collectively changing the contents of said built-in memory (31) and said storage medium (40, 50) of said portable terminal (20); and
wherein said portable terminal device (20) comprises a processor (32) which is adapted to store the first setting changing mail in said built-in memory (31); the portable terminal remote control system being **characterised by**:
an accepting unit which is adapted to accept a request related to a change of setting in said portable terminal (20) from a user of said portable terminal; wherein said setting changing mail sending unit (12, 14) being arranged to send a second setting changing mail to the portable terminal (20) for changing the contents of a built-in memory (31) of another portable terminal according to the second setting changing mail when the storage medium (40, 50) is inserted into the another portable terminal in response to the received request and said processor (32) stores the second setting changing mail in the storage medium (40, 50) ;
when the storage medium (40, 50) is inserted into the another portable terminal, a processor of the another portable terminal being adapted to update the contents in an internal memory of the another portable terminal by the second setting changing mail stored in the storage medium (40, 50) if the second setting changing mail specifies that the same set-up change should be effected to the another portable terminal each time the storage medium (40, 50) is reinserted into the another portable terminal.

## Patentansprüche

1. Eernsteuerungsverfahren für tragbare Endgeräte, zur Fernsteuerung eines tragbaren Endgerätes (20) von einer externen Vorrichtung (10), welches tragbare Endgerät (20) einen Hauptkörper (30) hat, der mit einem eingebauten Speicher (31) versehen ist, und ein anbringbares/lösbares Speichermedium (40, 50), welches Verfahren umfasst:
einen Einstellungsveränderungsnachrichtensendeschritt zum Senden einer ersten Einstellungsveränderungsnachricht durch die externe Vorrichtung (10) an das tragbare Endgerät (20), wodurch der Inhalt des eingebauten Speichers (31) und des Speichermediums (40, 50) des tragbaren Endgerätes (20) kollektiv verändert wird; und
einen Speicherschritt zum Speichern der ersten Einstellungsveränderungsnachricht in dem eingebauten Speicher (31);
welches Fernsteuerungsverfahren für tragbare Endgeräte **gekennzeichnet ist durch**:
einen Schritt zum Akzeptieren einer Aufforderung **durch** die externe Vorrichtung (10) bezüglich einer Veränderung der Einstellung in dem tragbaren Endgerät (20) von einem Nutzer des tragbaren Endgerätes (20); bei dem
der Einstellungsveränderungsnachrichtensendeschritt das Senden einer zweiten Einstellungsveränderungsnachricht **durch** die externe Vorrichtung (10) an das tragbare Endgerät (20) als Antwort auf die empfangene Aufforderung enthält, wodurch der Inhalt eines eingebauten Speichers (31) eines anderen tragbaren Endgerätes gemäß der zweiten Einstellungsveränderungsnachricht verändert wird, wenn das Speichermedium (40, 50) in das andere tragbare Endgerät eingesetzt wird, und der Speicherschritt das Speichern der zweiten Einstellungsveränderungsnachricht in dem Speichermedium (40, 50) enthält; und
einen Endgerätaktualisierungsschritt, um dann, wenn das Speichermedium (40, 50) in das andere tragbare Endgerät eingesetzt wird, und falls die zweite Einstellungsveränderungsnachricht spezifiziert, dass dieselbe Einstellungsveränderung an dem anderen tragbaren Endgerät jedesmal ausgeführt werden soll, wenn das Speichermedium (40, 50) wieder in das andere tragbare Endgerät eingesetzt wird, den Inhalt des internen Speichers des anderen tragbaren Endgerätes **durch** die zweite Einstellungsveränderungsnachricht zu aktualisieren, die in dem Speichermedium (40, 50) gespeichert ist.

2. Fernsteuerungsverfahren für tragbare Endgeräte nach Anspruch 1,
bei dem beim Einstellungsveränderungsnachrichtensendeschritt jede der ersten und zweiten Einstellungsveränderungsnachrichten zusätzlich zu einem Computerprogramm eine Veränderung eines Einstellungsidentifikators enthält.

3. Fernsteuerungsverfahren für tragbare Endgeräte nach Anspruch 1 oder 2, ferner umfassend:
einen Authentisierungsschritt, um nach Akzeptanz der Aufforderung bezüglich der Veränderung der Einstellung in dem tragbaren Endgerät (20) von dem Nutzer des tragbaren Endgerätes zu prüfen, ob der Nutzer ein autorisierter Nutzer ist oder nicht, und die Einstellungsveränderungsnachricht nur zu erzeugen, wenn der Nutzer ein autorisierter Nutzer ist.

4. Fernsteuerungssystem für tragbare Endgeräte, das wenigstens eine externe Vorrichtung (10) und wenigstens ein tragbares Endgerät (20) hat und zur Fernsteuerung des tragbaren Endgerätes (20) von der externen Vorrichtung (10) in der Lage ist, welches tragbare Endgerät (20) einen Hauptkörper (30) hat, der mit einem eingebauten Speicher (31) versehen ist, und ein anbringbares/lösbares Speichermedium (40, 50),
welche externe Vorrichtung (10) umfasst;
eine Einstellungsveränderungsnachrichtensendeeinheit (12, 14), die dafür ausgelegt ist, um eine erste Einstellungsveränderungsnachricht an das tragbare Endgerät (20) zum kollektiven Verändern des Inhaltes des eingebauten Speichers (31) und des Speichermediums (40, 50) des tragbaren Endgerätes (20) zu senden; und
bei dem das tragbare Endgerät (20) einen Prozessor (32) umfasst, der dafür ausgelegt ist, um die erste Einstellungsveränderungsnachricht in dem eingebauten Speicher (31) zu speichern;
welches Fernsteuerungssystem für tragbare Endgeräte **gekennzeichnet ist durch**:
eine Akzeptierungseinheit, die dafür ausgelegt ist, um eine Aufforderung bezüglich einer Veränderung der Einstellung in dem tragbaren Endgerät (20) von einem Nutzer des tragbaren Endgerätes zu akzeptieren; bei dem
die Einstellungsveränderungsnachrichtensendeeinheit (12, 14) angeordnet ist, um als Antwort auf die empfangene Aufforderung eine zweite Einstellungsveränderungsnachricht an das tragbare Endgerät (20) zu senden, zum Verändern des Inhaltes eines eingebauten Speichers (31) eines anderen tragbaren Endgerätes gemäß der zweiten Einstellungsveränderungsnachricht, wenn das Speichermedium (40, 50) in das andere tragbare Endgerät eingesetzt wird, und der Prozessor (32) die zweite Einstellungsveränderungsnachricht in dem Speichermedium (40, 50) speichert; und,
wenn das Speichermedium (40, 50) in das andere tragbare Endgerät eingesetzt wird, ein Prozessor des anderen tragbaren Endgerätes dafür ausgelegt ist, um den Inhalt in einem internen Speicher des anderen tragbaren Endgerätes **durch** die zweite Einstellungsveränderungsnachricht zu aktualisieren, die in dem Speichermedium (40, 50) gespeichert ist, falls die zweite Einstellungsveränderungsnachricht spezifiziert, dass dieselbe Einstellungsveränderung an dem anderen tragbaren Endgerät jedesmal ausgeführt werden soll, wenn das Speichermedium (40, 50) wieder in das andere tragbare Endgerät eingesetzt wird.

## Revendications

1. Procédé de télécommande de terminal portable consistant à télécommander un terminal portable (20) depuis un dispositif externe (10), ledit terminal portable (20) comportant un corps principal (30) pourvu d'une mémoire incorporée (31), et un support de stockage attachable/détachable (40, 50), le procédé comprenant :
une étape d'envoi de courrier de modification de réglage consistant à envoyer un premier courrier de modification de réglage, par le dispositif externe (10), au terminal portable (20), qui modifie collectivement les contenus de ladite mémoire intégrée (31) et du support de stockage (40, 50) du terminal portable (20) ; et
une étape de stockage consistant à stocker le premier courrier de modification de réglage dans la mémoire intégrée (31); le procédé de télécommande de terminal portable étant **caractérisé par** :
une étape d'acceptation d'une requête par le dispositif externe (10) concernant une modification de réglage dans le terminal portable (20) provenant d'un utilisateur du terminal portable (20), dans lequel,
l'étape d'envoi de courrier de modification de réglage comprend l'envoi d'un deuxième courrier de modification de réglage, par le dispositif externe (10), au terminal portable (20) qui modifie les contenus d'une mémoire intégrée (31) d'un autre terminal portable conformément au deuxième courrier de modification de réglage lorsque le support de stockage (40, 50) est inséré dans ledit autre terminal portable en réponse à la requête reçue, et l'étape de stockage comprend le stockage du deuxième courrier de modification de réglage dans le support de stockage (40, 50) ; et
une étape de mise à jour de terminal consistant à, lorsque le support de stockage (40, 50) est inséré dans ledit autre terminal portable, et si le deuxième courrier de modification de réglage spécifie que la même modification de réglage devrait être effectuée pour ledit autre terminal portable à chaque fois que le support de stockage (40, 50) est réinséré dans ledit autre terminal portable, mettre à jour le contenu dans une mémoire interne dudit autre terminal portable par le deuxième courrier de modification de réglage stocké dans le support de stockage (40, 50).

2. Procédé de télécommande de terminal portable selon la revendication 1,
dans lequel, à l'étape d'envoi de courrier de modification de réglage, chacun desdits premier et deuxième courriers de modification de réglage comprend en plus d'un programme d'ordinateur, un identificateur de modification de réglage.

3. Procédé de télécommande de terminal portable selon la revendication 1 ou 2, comprenant en outre :
une étape d'authentification consistant à, lors de l'acceptation de la requête concernant la modification de réglage dans ledit terminal portable (20) en provenance de l'utilisateur dudit terminal portable, vérifier si l'utilisateur est ou non un utilisateur autorisé, et générer le courrier de modification de réglage uniquement lorsque l'utilisateur est un utilisateur autorisé.

4. Système de télécommande de terminal portable comportant au moins un dispositif externe (10) et au moins un terminal portable (20) et capable de télécommander ledit terminal portable (20) depuis ledit dispositif externe (10), ledit terminal portable (20) comportant un corps principal (30) pourvu d'une mémoire intégrée (31), et un support de stockage attachable/détachable (40, 50),
dans lequel ledit dispositif externe (10) comprend :
une unité d'envoi de courrier de modification de réglage (12, 14) qui est adaptée pour envoyer un premier courrier de modification de réglage, audit terminal portable, (20), pour modifier collectivement les contenus de ladite mémoire intégrée (31) et dudit support de stockage (40, 50) dudit terminal portable (20) ; et
dans lequel ledit dispositif terminal portable (20) comprend un processeur (32) qui est adapté pour stocker le premier courrier de modification de réglage dans ladite mémoire intégrée (31) ; le système de télécommande de terminal portable étant **caractérisé par** :
une unité d'acceptation qui est adaptée pour accepter une requête concernant une modification de réglage dans ledit terminal portable (20) provenant d'un utilisateur dudit terminal portable ; dans lequel ladite unité d'envoi de courrier de modification de réglage (12, 14) est agencée pour envoyer un deuxième courrier de modification de réglage au terminal portable (20) pour modifier le contenu d'une mémoire intégrée (31) d'un autre terminal portable conformément au deuxième courrier de modification de réglage lorsque le support de stockage (40, 50) est inséré dans ledit autre terminal portable en réponse à la requête reçue et ledit processeur (32) stocke le deuxième courrier de modification de réglage dans le support de stockage (40, 50) ;
lorsque le support de stockage (40, 50) est inséré dans ledit autre terminal portable, un processeur dudit autre terminal portable étant adapté pour mettre à jour le contenu dans une mémoire interne dudit autre terminal portable par le deuxième courrier de modification de réglage stocké dans le support de stockage (40, 50) si le deuxième courrier de modification de réglage spécifie que la même modification de réglage devrait être effectuée pour ledit autre terminal portable à chaque fois que le support de stockage (40, 50) est réinséré dans ledit autre terminal portable.
